# NEW EUROPEAN PATENT SPECIFICATION

(11) **EP 0 514 648 B2**
(45) Date of publication and mention of the opposition decision: **11.10.2000**
(45) Mention of the grant of the patent: 05.06.1996
(21) Application number: 92105456.5
(22) Date of filing: 30.03.1992
(51) Int. Cl.: C08F 8/32

(54) **Microdispersions of hydroxamated polymers**
Microdispersionen von Polymeren mit Hydroxamsäuregruppen
Microdispersions de polymères à fonctions hydroxamiques

(30) Priority: 23.05.1991 US 704477
(43) Date of publication of application: 25.11.1992
(73) Proprietor: CYTEC TECHNOLOGY CORP., Wilmington, Delaware 19801 (US)
(72) Inventor: Heitner, Howard Ivan, Stamford, Connecticut 06905 (US); Ryles, Roderick Glyn, Milford, Connecticut 06460 (US)
(74) Representative: Allam, Peter Clerk

(56) References cited:
- WO-A-88/06602
- US-A- 4 022 741
- US-A- 4 587 306
- US-A- 4 767 540
- US-A- 4 902 751
- US-A- 4 956 399

## Description

Polymers containing hydroxamate groups have been known to be particularly useful for the flocculation of red muds produced in the Bayer process, see U.S. Pat. No. 4,767,540. These polymers are generally produced by reacting aqueous solutions of the polymers, e.g. polyacrylamide, with hydroxylamine salts. When the molecular weight of the polymer being hydroxamated is of such a value that the polymer performs at its best in the flocculation application, it has hitherto been in the form of a highly viscous gel. The high viscosity of the gel causes major handling problems both during and after hydroxamation since high viscosity fluids are extremely difficult to transfer from one vessel to another e.g. from reactor to storage, from storage to shipment container and from shipment container to application. The viscosity of such a gel is particularly high when the molecular weight of the polymer is high.

Furthermore, it is customary for polymers of such high viscosities to be pre-diluted, usually in water, before they are used, so that they may be more easily mixed into the substrate which is to be subjected to flocculation. The high viscosity of hydroxamated polymer gels makes this a difficult process to undertake and often requires the use of specialized and expensive equipment. These inherent limitations in such gels necessarily means that the solids content of such gel products must be kept as low as possible in order to maintain the viscosity at a practical level, i.e. the lower the solids content, the lower the viscosity. The shipment costs of low solids solutions of polymer, however, are significantly higher because of the dilution.

In the case of conventional acrylamide polymers, the viscosity problems have been largely overcome through the development of high solids water-in-oil microdispersions, i.e. such forms as microemulsions, emulsions, microsuspensions, and as used herein, such term is meant to include said forms. As small particles, the high viscosity polymers, while still being, in effect, gels themselves, are nevertheless, more easily dissolved in the substrates to which they are added in use. Thus, where a polymer solution at high solids is a stiff gel, a microdispersion of the same gel is more easily handled and used due to its low viscosity.

Attempts have been made to create stable microdispersions of hydroxamated polymers in the past, see U.S. Patent Nos. 4,587,306; 4,767,540 and 4,868,248. Due to the complexities of performing the hydroxamation reaction in this product form, however, it has not been possible to satisfactorily accomplish this goal. The problems attendant such hydroxamation reactions include poor incorporation of the hydroxamate functionality, poor stability of the emulsion, insolubilization of the polymer, and molecular weight degradation.

U.S. Pat. No. 4,587,306 discloses a method for preparing hydroxamated polymer emulsions from polyacrylamide backbones of low molecular weight, e.g. 4000. There is no evidence, however, that the material produced was a true polymer dispersion in oil or, in fact, even an oil-in-water type. It is known that the problem of reacting a polymer backbone with a reagent becomes more acute when the molecular weight of the polymer is high. Attempts to produce, by the method of U.S. Pat. No. 4,587,306, both low and high molecular weight, stable, water-in-oil hydroxamated polymer emulsions have shown that the incorporation of hydroxamate functionality is much lower (and insignificant) than shown therein for the claimed low molecular weight polymers. Furthermore, at the elevated temperatures thereof, e.g. 70°C, a stable emulsion could not be formed. Indeed, a stable, high molecular weight, hydroxamated polymer emulsion was not formed under the conditions of this patent at room temperature or at 70°C. Thus, it is clear that the process of the '306 patent is not suitable for the preparation of the microdispersions claimed herein. A further distinction worth noting is that the mole ratio of KOH to hydroxylamine hydrochloride used by the process of U.S. Pat. No. 4,587,306 is only 0.78, i.e. the hydroxylamine is only partially neutralized and the reaction is therefore conducted under acidic conditions which limits the rate of the reaction and necessitates the use of extreme temperatures which further causes the formation of unstable products.

In U.S. Pat. No. 4,767,540 there is disclosed a method for the production of hydroxamated polyacrylamides in which there is purported to be produced a stable emulsion of hydroxamated polyacrylamide. However, attempts to duplicate the procedure of this patent have proven to be fruitless in that the resultant products are not stable, water-in-oil microdispersions, see Examples 34 and 35, below.

U.S. Pat. No. 4,868,248 discloses that emulsions of hydroxamated polymers can be produced; however, the patentee fails to disclose any specific example to the production of such a polymer. Both methods described for preparing the polymers thereof are solution-based and no water-in-oil microdispersions are shown.

From US-A-4956 399, a composition is known comprising (alk)acrylamide-containing polymeric microparticles, said (alk)acrylamide polymer being substituted with at least about 1 mole percent of tertiary aminomethyl groups and having an average particle size of from about 200 to about 4000 Å in diameter, which aminomethyl groups continually self cross-link the polymer at ambient conditions.

Accordingly, the search continues for a method for the production of stable microdispersions of hydroxamated polymers, i.e. one in which the structural integrity of the microdispersion remains intact.

Stable microdispersions of hydroxamated polymers of the water-in-oil type with particle sizes ranging from about 0.02 to 50 µm and having molecular weights of over 1,000,000 and the structured integrity of the microdispersion remains intact have been produced. The microdispersions are gel-free and are readily dispersed in water by self-inversion.

Hydroxamated polymers in microdispersion form are produced by reacting a water-in-oil microdispersion comprising a continuous phase and a discontinuous phase containing a precursor polymer with neutralized hydroxylamine and an excess of base. The process does not require elevated temperatures or extended reaction times, contrary to prior art procedures.

The instant invention relates to stable, water-in-oil microdispersions comprising a continuous phase of an oil and an emulsifier and a discontinuous phase comprising particles of an aqueous solution of an hydroxamated polymer having a molecular weight over 1,000,000, wherein said particles have an average size ranging from 0.02 to 50 µm, the microdispersion has a solution viscosity over 2.0 mPa.s, and the structural integrity of the microdispersion remains intact.

The invention also relates to a method of producing such a stable, water-in-oil microdispersion, which comprises reacting (1) a water-in-oil emulsion comprising a continuous phase of a hydrocarbon oil and an emulsifier and a discontinuous phase of an aqueous solution of a polymer having a molecular weight over 1,000,000 with (2) neutralized hydroxylamine and at least a 0.25 molar excess amount of base at a temperature ranging from 10°C to 90°C.

Exemplary of the polymers useful in the present invention are those which contain a pendant functionality which will react with hydroxylamine, such as vinyl polymers, i.e. those produced from acrylic, methacrylic, crotonic, acid esters such as methyl acrylate, ethyl acrylate, t-butyl acrylate, methacrylate, dimethylaminoethyl methacrylate, dimethylaminoethyl acrylate, methyl crotonate, ; polymers of maleic anhydride and esters thereof, ; nitrile polymers such as those produced from acrylonitrile ; amide polymers such as those produced from acrylamide and methacrylamide. Carboxymethylcellulose esters, starch esters, xanthates, may also be used. The polymers may be also cross-linked such as by reaction with a cross-linking agent, e.g. methylenebisacrylamide or divinylglycol.

The above vinyl monomers may also be copolymerized with each other or with any other anionic, cationic or non-ionic monomer, or mixture thereof.

Suitable emulsifiers useful in the preparation of the water-in-oil microdispersion of the polymers to be hydroxamated include the ethoxylated fatty amines; the alkanolamides of fatty acids; imidazole-fatty acid reaction products; alkanolamine-fatty acid condensation products and sorbitan fatty esters. Suitable emulsifiers should be chosen to result in polymer particles ranging in size from about 0.02 to about 50 µm.

The polymers of the water-in-oil emulsions claimed herein have molecular weights over 1,000,000.

Any known oil may be used in forming the microdispersion of polymers to be hydroxamated including isoparaffinic, normal or cyclic hydrocarbons such as benzene, xylene, toluene, fuel oil, kerosene, odorless mineral spirits, and mixtures thereof.

The ratio of aqueous phase to hydrocarbon phase should range from about 0.5 to about 3:1, and usually approximates 2:1.

The precursor microdispersion, and/or the final hydroxamated polymer microdispersion, may be treated to remove water and/or oil by distillation so as to increase the polymer solids content. The polymer solids content may range from about 5% to about 70%, preferably from about 10% to about 60%, based on the total weight of the microdispersion.

The precursor microdispersion may be treated with hydroxylamine in accordance with the process of the present invention by any known variety of means. The hydroxylamine is usually employed as a salt.

Suitable hydroxylamine salts include the sulfates, sulfites, phosphates, hydrochlorides, acetates and propionates. The pH of the hydroxylamine solution is adjusted to about 3-14, preferably over about 6.0, more preferably over about 11.0, by means of acid or base addition to the solution.

The degree of hydroxamation, i.e,, the concentration of hydroxamate units in the polymers useful herein, may range from about 1 to about 100 mole percent, preferably from about 5 to about 75 mole percent and, most preferably, from about 10 to about 50 mole percent.

The hydroxylamine salt is preferably used in conjunction with a molar excess of base such as potassium hydroxide, sodium hydroxide, ammonia and lime. The preferred base is sodium hydroxide.

The hydroxamation reaction may be conducted at low temperature i.e. from about 10°C to about 90°C, preferably from about 15°C to about 60°C, more preferably about 15°C - 40°C.

In a preferred embodiment, a hydroxylamine stabilizer is added to the hydroxylamine reactant. Suitable stabilizers include water-soluble alkali metal, alkaline earth metal or ammonium thiosulfates; 2-mercaptothiazoles; 2-mercaptothiazolines; thiuram disulfides; thioureas; mercaptoalkanols; see EP application No. 92105455.7.

The hydroxylamine or its salt, excess base and, preferably, the stabilizer may be added to and reacted with the precursor polymer microdispersion in the form of an aqueous solution or as an emulsion. Preferably, the compounds are used in the form of an emulsion. The emulsion may be formed by adding an aqueous solution of the compounds to any of the oils described above in the presence of an emulsifier such as those disclosed above. Homogenization of the aqueous solution with the oil and emulsifier is preferred; however, a useful cruder emulsion may be attained by merely stirring said components. Alternatively, the solution of hydroxylamine, excess base and stabilizer can be added directly to the precursor polymer microdispersion to which may be added, additional oil and emulsifier, with stirring. Still further, each individual component, i.e. the hydroxylamine, the excess base and the stabilizer, may be formed into individual emulsions and added as such to the precursor polymer microdispersion.

The degree of hydroxamation is controlled by the ratio of the added hydroxylamine reagent to the ratio of the precursor polymer back-bone reactive groups, as is known in the art. The instant method results in a very high conversion of hydroxylamine. The degree of hydroxamation may be determined by carbon 13 Nuclear Magnetic Resonance spectroscopy and is quoted herein in mole percent. The molecular weights may be determined by ascertaining the viscosity of a dilute polymer solution in molar sodium chloride. The Solution Viscosity (SV), as used herein, is determined on a 0.1% polymer solution at 25°C using a Brookfield viscometer with UL adapter at 30 rpm for SV greater than 10 and 60 rpm for SV less than 10 and as quoted in mPa.s. Hydroxamated polymer water-in-oil microdispersions having Solution Viscosities of over about 2.0 can be produced by the process of this invention.

The hydroxamated polymer water-in-oil microdispersions of this invention can be dissolved directly in water to form aqueous solutions. Additional emulsifiers may be added to the microdispersions or dilution water to improve the dissolution characteristics, if necessary or desired. Additionally, the hydroxamated polymer may be isolated from the microdispersion to form a dry powder such as by precipitation in a non-solvent or by drying.

The following examples are set forth for purposes of illustration only. All parts and percentages are by weight unless otherwise specified.

### Example 1

### (Comparative)

Following the teaching of U.S. Pat. No. 4,587,306 (Vio) a water-in-oil microdispersion of polyacrylamide (molecular weight about 6 million) is treated with hydroxylamine hydrochloride (0.5 equivalent on polyacrylamide) and potassium hydroxide (0.35 equivalent). The microdispersion is prepared by adding 4.7 parts of paraffin oil to a polyacrylamide microdispersion (13.5% solids), made with an ethoxylated octyl phenol emulsifier. The temperature is maintained below 30°C during the addition. This mixture is then stirred overnight. A sample of the mixture is then heated to 70°C for six hours. It gels and the oil phase separates. NMR analysis of the polymer gel shows 5% hydroxamate (10% conversion). A sample of the mixture held at room temperature is stable. This sample shows no hydroxamate by NMR after 5 days. This example shows that Vio's method does not give any incorporation of hydroxylamine at room temperature and only 10% (to give a 5 mole% hydroxamated polymer) at 70°C. At 70°C, the emulsion gels, i.e. it is not a stable dispersion. This example differs from Vio in that the molecular weight of the precursor is much greater ca. 6 million.

### Example 2

### (Comparative)

34.6 Parts of a 30% solution of hydroxylamine sulfate are added over 20 min. to 130 parts of a conventional high molecular weight inverse polyacrylamide microdispersion containing 45.5 parts of polyacrylamide at room temperature. The mixture is stirred for one half hour. 13.4 Parts of 50% NaOH are added over 20 minutes, i.e. excess over hydroxylamine. The mixture gels. Similar results are obtained when the microdispersion mixture is homogenized as the NaOH solution is added.

### Example 3

99 Parts of 30% hydroxylamine sulfate is combined with 20 parts of sodium thiosulfate and the mixture is neutralized with 160 parts of 50% NaOH keeping the temperature below 25°C. The mole ratio of free NaOH to hydroxylamine is 4.5:1. The solution is filtered. An oil phase is made by dissolving 4 parts of ethoxylated fatty amine (degree of ethoxylation = 5) in 108 parts of hydrocarbon solvent (LOPS). The aqueous solution is homogenized by adding it over 1 minute to the oil phase using a suitable homogenizer to give an emulsion containing 0.0009 mole/part of hydroxylamine. A 52.5 part portion of this emulsion is added to 50 parts of a polyacrylamide microdispersion (m.w. = 10.6 million) containing 33.8% polymer, by weight. The mole ratio of hydroxylamine to amide is 0.2:1., and the mole ratio of excess NaOH to amide is 0.9:1. The product has a Solution Viscosity of 8.6 mPa.s after 1 week. The polymer contains 16.2% hydroxamate by NMR (81% conversion). This example shows that a stable, high molecular weight, hydroxamated polymer microdispersion can be prepared by adding the reagents in the form of an emulsion.

### Example 4-11

50% Sodium hydroxide is added to a solution containing hydroxylamine sulfate and sodium thiosulfate to give a solution containing hydroxylamine sulfate, sodium thiosulfate and NaOH in a mole ratio of 9.0/2.25/49.5. Sufficient water is added to dissolve all the products of neutralization. Portions of this solution are emulsified with various emulsifiers to give inverse emulsions containing hydroxylamine and excess NaOH. These are mixed with homopolyacrylamide and ammonium acrylate/acrylamide copolymer microdispersions prepared in the presence of various surfactants. In all cases, the mole ratio of hydroxylamine to amide is 0.2:1. The results are shown in Table I, below. These examples show that the hydroxylamine/basic compound/stabilizer emulsion which is employed to react with the precursor polymer can be prepared with a variety of different surfactants. Also, the precursor polymer microdispersion may be prepared with different surfactants. Also, the precursor polymer may be an anionic copolymer.

**Table I**

| Ex. | Prim. Surf. | (%) | Ha Emul. | (%) | Hydroxamate Mole % | Conversion % |
|---|---|---|---|---|---|---|
| 4 | A | 1% | A | 1% | 17.4 | 87 |
| 5 | A | 1% | B | 2% | 19.1 | 95 |
| 6 | A | 1% | C | 2% | 15.5 | 77 |
| 7 | A | 1% | D | 2% | 16.6 | 83 |
| 8 | A | 1% | E | 2% | 18.1 | 90 |
| 9 | A | 1% | D | 2% | 16.6 | 83 |
| 10 | F | 2.2% | E | 2% | 17.2 | 86 |
| 11 | F | 2.2% | B | 1% | 16.7 | 83 |
| For Examples 4-9, a homopolyacrylamide backbone is used (mw = 10.6M). For Examples 10-11, an anionic polyacrylamide backbone prepared from ammonium acrylate (5 mole%) and acrylamide (95 mole%) is used (mw = 11M). Prim. Surf. = primary surfactant used to prepare the precursor polymer microdispersion. Ha Emuls. = the surfactant used to prepare the hydroxylamine reagent emulsion. A = Isopropanolamide of a fatty acid B = Ethoxylated fatty amine (degree of ethoxylation = 5) C = 2-Hydroxyethyl, oleylimidazoline D = The condensation product of diethanolamine and oleic acid E = An ethoxylated fatty amine (degree of ethoxylation = 2) F = Sorbitan Monooleate | | | | | | |

### Example 12

In a similar manner to Examples 4-11, hydroxylamine sulfate is neutralized with excess sodium hydroxide in the presence of thiosulfate. Sufficient water is added to dissolve the reaction products. A water-in-oil emulsion is made by mixing this aqueous solution with a solution of an ethoxylated fatty amine (degree of ethoxylation = 5) in a paraffin oil without the use of a homogenizer. This reagent emulsion has a bulk viscosity of 73 m.Pa.s(cps) showing that the particle size of this emulsion is large. At room temperature, a 29.5 part aliquot of this emulsion is added to 20 part portion of a homopolyacrylamide microdispersion (molecular weight about 12.5 million) containing 33.8% polymer. The resultant stable microdispersion has a Solution Viscosity of 11.7 and 18% hydroxamate by NMR (90% conversion).

### Example 13

In a manner similar to Example 12, an aliquot of the reagent emulsion is homogenized with a homogenizer. The bulk viscosity of the emulsion is 127 m.Pa.s(cps) showing that the particle size is small. A 29.5 part aliquot of this emulsion is added to the same polyacrylamide backbone microdispersion used in Example 12. The resultant microdispersion is stable and has a Solution Viscosity of 13.2 and 17.5% hydroxamate by NMR (85% conversion).

### Example 14

A mixture of 2.5 parts of an ethoxylated fatty amine (degree of ethoxylation =2) and 34.5 parts of a paraffin oil is added to 90 parts of a homopolyacrylamide microdispersion (mw = 12.5M) containing 33.8% polymer. 39.5 Parts of 50% sodium hydroxide are added slowly to a mixture of 7.4 parts of hydroxylamine sulfate, 3.6 parts of sodium thiosulfate and 49.5 parts of water, keeping the temperature below 25°C. Over a period of twenty minutes, 95.5 parts of this solution are added with stirring, to the polyacrylamide backbone. After all the hydroxylamine is added, 0.5 part of an ethoxylated nonyl phenol is added over 30 minutes to a 50 part aliquot of the hydroxamated polymer microdispersion. The resultant microdispersion is stable and self-inverting in water (i.e it dissolves readily in water without the use of additional surfactants). It has a Solution Viscosity of 10.8 and a hydroxamate content of 17.9% (90% conversion).

### Example 15

3.3 Parts of hydroxylamine hydrochloride are reacted with 7.45 parts of potassium hydroxide in 18.1 parts of water. (The mole ratio of excess KOH to hydroxylamine in this solution is 1.8:1) 1.0 Part of an ethoxylated fatty amine (degree of ethoxylation = 2) is dissolved in 10.2 parts of paraffin oil and the mixture added to 50 parts of the same homopolyacrylamide microdispersions described in Example 1. 28.8 Parts of the hydroxylamine/KOH solution are added to the homopolyacrylamide giving the same mole ratio of hydroxylamine to amide as in Example 1. The mixture is stirred overnight. A sample of the product is heated to 70°C for six hours. It shows 38.9% hydroxamate (78% conversion). A sample of the same mixture shows 46.2% hydroxamate after 5 days aging at room temperature (92% conversion). This example shows that a stable, high molecular weight, hydroxamated polymer microdispersion is obtained even when the potassium hydroxide is present in excess and when suitable surfactants are employed.

### Example 16

4.7 Parts of an ethoxylated fatty amine (degree of ethoxylation = 2) are dissolved in 65.1 parts of paraffin oil and this solution is added to 169.7 parts of a homopolyacrylamide microdispersion containing 33.8% polymer. 50% Sodium hydroxide is added to a solution containing hydroxylamine sulfate and sodium thiosulfate stabilizer to give a solution as in Examples 4-11. This aqueous solution is held at room temperature for 2 hours after the addition of the NaOH. Then, 21.5 parts of this solution are added dropwise over one hour, with stirring, to 28.5 parts of the polyacrylamide microdispersion mixture. The mole ratio of hydroxylamine to amide is 0.2:1. The final product is a stable, polymer microsuspension which is hydroxamated to 21 mole % (100% conversion). The Solution Viscosity (SV) is found to be 12.6 and 11.3 mPa.s (90% retention) after 1 and 13 days aging, respectively, at room temperature, i.e. about 20°C. This example shows that the problem of hydroxylamine degradation can be overcome by use of a suitable stabilizer - in this case, sodium thiosulfate. In this example, the hydroxylamine reagent is added as a solution. Also, this example clearly shows that the stabilizer also reduces loss of molecular weight as indicated by the much better retention of Solution Viscosity.

### Example 17

In the same way as Example 14, a solution is made containing NaOH and thiourea stabilizer. The mole ratio of hydroxylamine to NaOH to stabilizer is as in Examples 4-11. The solution is held for two hours at room temperature. 21.5 Parts of this solution are then added in the same manner as in Example 4 to 28.5 parts of the same polyacrylamide microdispersion mixture. The product is a stable polymer microdispersion which is hydroxamated to 20 mole % (100% conversion). This example shows that thiourea can be used as a hydroxylamine stabilizer.

### Example 18

A solution containing the same levels of hydroxylamine and NaOH as Examples of 16 and 17, but containing no stabilizer, is made and held for two hours at 20°C. It is added in the same proportion and at the same rate to the same polymer microdispersion mixture as Examples 16 and 17. The product is a stable polymer microdispersion which is hydroxamated to 9.1 mole % (45% conversion). The Solution Viscosity of the polymer is 11.8 and 7.7 (65% retention) mPa.s after 1 and 13 days aging at 20°C, respectively. This example shows that in the absence of a hydroxylamine stabilizer, degradation of hydroxylamine occurs when it is stored for 2 hours at room temperature causing a decrease in conversion. Furthermore, in the absence of a stabilizer, the polymer can undergo molecular weight degradation. This is clearly demonstrated by the loss in Solution Viscosity. However, the integrity of the microdispersion remains stable.

### Example 19

An inverse hydroxylamine emulsion containing hydroxylamine and NaOH in the mole ratio of 6.4 to 35.6 is made by emulsifying the solution described in Examples 4-11 with a solution to an ethoxylated fatty amine (degree of ethoxylation = 5) in paraffin oil. 30.0 Parts of this emulsion are added to 30 parts of an anionic acrylamide polymer (a 30:70 copolymer of ammonium acrylate with acrylamide - molecular weight about 20 million) microdispersion which contains 25.7% polymer. The mole ratio of hydroxylamine to monomer units is 0.20:1 and the mole ratio of free NaOH to monomer units is 0.9:1. The product is a stable microdispersion which is 16.5% hydroxamated (82% conversion). The Solution Viscosity is 9.7 after 5 days.

### Example 20

The same hydroxylamine emulsion as described in Example 19 is added to an anionic acrylamide polymer microdispersion. The polymer is a 30:70 (on a molar basis) copolymer of 2-acrylamidomethyl-2-propanesulfonic acid (Na salt) and acrylamide. The mole ratios of hydroxylamine and caustic are the same as in Example 13. The product is a stable, polymer microdispersion which contains 15.8% hydroxamate (79% conversion). The Solution Viscosity is 7.0 after 5 days.

### Example 21

A cationic polyacrylamide microsuspension is prepared from a mixture of acrylamide (90 mole%) and dimethyldiallylammonium chloride (10 mole%) monomers using standard redox initiated polymerization. The product contains 30.4% polymer based on acrylamide alone. 1.5 Parts of an ethoxylated fatty amine (degree of ethoxylation = 2) are dissolved in 17 parts of paraffin oil and the mixture added to 50 parts of the polymer emulsion. 47.5 Parts of the same hydroxylamine-caustic-thiosulfate solution as in Example 16 are added over 30 minutes to the polymer microdispersion mixture. The product is a stable microdispersion which has a Solution Viscosity of 2.8. A sample of the polymer is isolated by precipitation in methanol. The dry polymer contains 14% hydroxamate (70% conversion) and 2% quaternary ammonium groups (20% conversion).

### Example 22

153.5 Parts of a homopolyacrylamide microdispersion containing 33.8% polymer are heated under vacuum in order to partially remove water and oil. The polymer solids are increased to 47.4%. 1.5 Parts of an ethoxylated fatty amine (degree of ethoxylation = 5) are dissolved in 21.5 parts of paraffin oil. This mixture is added to 40 parts of the partially dehydrated microdispersion. A solution is made up containing the same levels of hydroxylamine, excess NaOH and sodium thiosulfate as in Example 16. 59.5 Parts of this solution are added over 25 minutes to the polymer microdispersion mixture. The product is a stable polymer microdispersion, has a Solution Viscosity of 11.3 after one day and contains 16% hydroxamate (80% conversion). This example shows that the precursor microdispersion may be dehydrated prior to reaction with hydroxylamine.

### Example 23

An inverse microemulsion acrylamide homopolymer is made by polymerizing an aqueous acrylamide solution with an isoparaffin solvent containing polyoxyethylene sorbitan monooleate and sorbitan monooleate. The polymerization is carried out using a redox initiator system. The microemulsion contains 23% polyacrylamide, by weight, and has an average particle size of 31 nm. 10.0 Parts of a paraffin solvent are combined with 2.0 parts of an ethoxylated fatty amine (degree of ethoxylation = 5), 11.2 parts of 50% aqueous sodium hydroxide, 2 parts of 30% aqueous sodium thiosulfate and 5.2 parts of 47% aqueous hydroxylamine hydrochloride while stirring and maintaining the mixture at 25°C. This solution is stirred for 20 minutes and then added to 29.0 parts of the polyacrylamide microemulsion. The resultant product is a stable microemulsion and has a Solution Viscosity of 10.7 and a hydroxamate content of 27% (72% conversion). This example shows that the precursor microdispersion may be a microemulsion.

### Example 24

An inverse emulsion containing hydroxylamine is made by combining 251 parts of 30% hydroxylamine sulfate solution and 37 parts of sodium thiosulfate and homogenizing this solution with a mixture of 108 parts of paraffin oil and 4 parts of an isopropanolamide derivative of a long chain fatty acid (emulsifier). A second emulsion is made by emulsifying 50% aqueous sodium hydroxide with a mixture of paraffin oil and an ethoxylated fatty amine (degree of ethoxylation = 5). 20.7 Parts of the hydroxylamine sulfate emulsion are added over one hour to 29.1 parts of the sodium hydroxide emulsion. The mole ratio of hydroxylamine to NaOH is 5.5:1.0. 22.5 Parts of this mixture are then added to 20 parts of an anionic inverse polyacrylamide (5 mole % carboxylated) microdispersion. The product is a stable microdispersion which has a Solution Viscosity of 10.8 after one day and contains 16.2% hydroxamate (81% conversion).

### Example 25

Following the procedure of Example 24, 8.3 parts of the same hydroxylamine sulfate emulsion thereof are added to 40 parts of a homopolyacrylamide microdispersion containing 33.8% polymer. 42.3 Parts of an inverse emulsion containing sodium hydroxide and sodium thiosulfate are then added, over one hour, to the mixture at a ratio of 45:0.16, respectively. The Solution Viscosity of the resultant polymer emulsion is 5.4 after 7 days and the hydroxamate content is 6.4% (64% conversion). Examples 24 and 25 show that the reagent emulsions may be added separately.

### Example 26

Following Example 3, a water-in-oil emulsion containing neutralized hydroxylamine is made in which the mole ratio of excess NaOH to hydroxylamine is 4.5:1. A 21.7 part portion of this emulsion is mixed with a 50.0 part portion of the same polyacrylamide microdispersion described in Example 1, to give a mole ratio of hydroxylamine to amide of 0.10:1 and a mole ratio of excess NaOH to amide of 0.45:1. The product is a stable microdispersion and has a Solution Viscosity of 7.3 after 1 day. The hydroxamate content is 7% by NMR (70% conversion).

### Example 27

58.3 Parts of hydroxylamine hydrochloride are combined with 116 parts of water and 13 parts of sodium thiosulfate. The mixture is neutralized with 128 parts of 50% NaOH. The solution is filtered and a 288 part portion thereof is emulsified with a solution of 4 parts of an ethoxylated fatty amine (degree of ethoxylation = 5) and 108 parts of a paraffin oil to give an emulsion. A 97.0 part portion of this emulsion is mixed with 35.0 parts of the anionic acrylamide polymer microdispersion of Example 19 containing 38% polymer to give a mole ratio of hydroxylamine to amide of 1:1. The product is a stable microdispersion. The polymer contains 73.4 mole % hydroxamate by NMR (73% conversion). The Solution Viscosity is 2.9 after 6 days. Examples 26 and 27 show that the process may be used to make a polymer containing low and high amounts of hydroxamate, respectively.

### Example 28

In a manner similar to Examples 4-11, hydroxylamine sulfate is neutralized with excess sodium hydroxide in the presence of sodium thiosulfate (25 mole % on hydroxylamine). Sufficient water is added to dissolve the neutralization products. The ratio of excess NaOH to hydroxylamine in this aqueous phase is varied. Inverse water-in-oil emulsions are then made using an ethoxylated fatty amine (degree of the ethoxylation = 5) as emulsifier. The concentration of hydroxylamine in the aqueous phase of these hydroxylamine emulsions is kept constant by addition of water. 29.5 Parts of each of the resultant emulsions containing 0.019 part of hydroxylamine are added to 20 part portions of a polyacrylamide microdispersion containing 33.8% polyacrylamide to give a mole ratio of hydroxylamine to amide of 0.20:1. All products are stable microdispersions and have the compositions shown in Table 2, below. This example shows that a variety of mole ratios of NaOH/hydroxylamine above 1.0:1.0 may be used to prepare stable microdispersions.

**Table 2**

| Excess NaOH | | | | |
|---|---|---|---|---|
| Example | Polymer Solids | Hydroxylamine Mole Ratio | Hydroxamate Mole % | Conversion % |
| 28a | 13.7 | 4.5 | 18.0 | 90% |
| 28b | 13.7 | 3.0 | 15.6 | 78% |
| 28c | 13.7 | 2.0 | 14.4 | 72% |
| 28d | 13.7 | 0.5 | 12.7 | 63% |
| 28e | 13.7 | 0.25 | 10.6 | 53% |

### Example 29

A hydroxamated polymer microdispersion is prepared according to the procedure shown in Example 3. Its performance in flocculating a suspension of "Red Mud" obtained from an alumina processing plant is compared with that of a commercially available polyacrylate flocculant which is used for that purpose. The results are shown below, in Table 3.

**Table 3**

| Polymer | Dose Grams/Ton | Settling Rate m/hr (ft/hr) | Suspended Solids mg/l |
|---|---|---|---|
| Commercial Polyacrylate | 134 | 11.27 (37) | 134 |
| Hydroxamated | 80 | 2.13 (7) | 60 |
| Polymer | 107 | 9.75 (32) | 40 |
| Microdispersion | 134 | 15.44 (51) | 29 |
| | 160 | 18.89 (62) | 35 |
| | 188 | 32.91 (108) | 20 |

This example shows that a hydroxamated polyacrylamide microdispersion prepared by the methods herein disclosed gives better performance, as demonstrated by the higher settling rate and lower suspended solids, than a conventional polymer in the flocculation of "Red Mud".

### Example 30

### (Comparative)

A polyacrylamide (molecular weight about 4200) is made by polymerizing an aqueous solution of acrylamide. The solution is diluted to 46.1% solids. An oil phase is made by dissolving 8 parts of an ethoxylated octyl phenol, HLB = 3.6 (Surfactant G) in 132 parts of kerosene. Using a suitable homogenizer, 260 parts of the polymer solution are added slowly to the oil phase. After 100 seconds of mixing, the homogenizer is increased to #5 for 30 sec. The two phases separate into distinct layers immediately.

### Example 31

### (Comparative)

The procedure of Example 30 is repeated, except that 8 parts of an ethoxylated octylphenol (HLB = 7.8 - Surfactant H), are substituted for Surfactant G. An emulsion forms which separates into distinct phases within 1.5 hours. The procedure is then repeated with an oil phase of 16 parts of Surfactant H and 234 parts of kerosene. The emulsion that forms separates into distinct layers within 2 hours.

### Example 32

### (Comparative)

Example 30 is repeated, except that 8 parts of an ethoxylated octylphenol (HBL = 10.4 - Surfactant I), are substituted for Surfactant G. A stable polyacrylamide emulsion forms. This emulsion has the same composition as the emulsion in U.S. Pat. No. 4,587,306, Example 27. Conductivity measurements indicate that the oil is the continuous phase. A solution is made of 7.34 parts of hydroxylamine hydrochloride in 22.5 parts of water. Over a period of about 25 minutes, this solution is added to 50 parts of the stirred polymer emulsion made with Surfactant I. A 50 part aliquot of this emulsion is stirred and 8.07 parts of a 36% solution of KOH are added over a period of about 30 minutes. The mole ratio of KOH to hydroxylamine chloride is 0.78:1, the same as in U.S. Pat. No. 4,587,306 (Vio). A sample of this emulsion is heated in an oven at 70°C for 7 hours. The phases completely separate after the sixth hour. The polymer aqueous phase of the heated sample contains 0% hydroxamate. Examples 30-32 show that Vio's method cannot be used to prepare stable inverse microdispersions of low molecular weight polymers. Since Vio did not describe the degree of ethoxylation or the octylphenol emulsifiers therein used with any degree of particularity, a range covering low, intermediate and high HLB emulsifiers are tested in these examples. None give satisfactory results, i.e. all emulsions separate into separate distinct phases.

### Example 33

Example 30 is repeated, except that the oil phase is composed of 4 parts of an isopropanolamine amide of oleic acid and 136 part of kerosene. A stable inverse polymer microdispersion containing 30% polyacrylamide forms. An inverse emulsion is made containing hydroxylamine and NaOH in a mole ratio of 0.65:3.55. 32.6 Parts of this emulsion are added to a 25 portion of the polymer emulsion. The product is a stable inverse emulsion of a hydroxamated polymer. The conversion is 100%.

### Example 34

### (Comparative)

Following the examples of Spitzer U.S. Pat. No. 4,767,540, 58.2 parts of a commercial acrylic acid acrylamide copolymer microdispersion (degree of anionicity = 3 mole%, molecular weight about 12-15 million) are mixed with 16.3 parts of solid hydroxylamine sulfate such that the hydroxylamine sulfate/amide mole ratio is 1:1. An equimolar amount of 50% sodium hydroxide solution (15.9 parts) is added. The mixture is heated to 90°C and stirred for 5 hours. It is then placed in a 90°C oven for 16.5 hours. The product is a homogeneous, stiff gel in which the oil is dispersed as an emulsion. The product is soluble in water and has a Solution Viscosity of only 1.4 mPa.s (molecular weight approximately 1 million).

### Example 35

### (Comparative)

The procedure of Example 34 is repeated except that a commercial acrylic acid-acrylamide copolymer dispersion with a degree of anionicity = 30% is used as the polymeric reactant. The product is a stiff gel in which the oil is dispersed as an emulsion. It is insoluble in water.

### Example 36

A cross-linked inverse polyacrylamide microdispersion (26% activity) is made by copolymerizing acrylamide with 500 ppm (relative to acrylamide) of divinylglycol. 57.6 Parts of an inverse emulsion containing the same levels of hydroxylamine, sodium hydroxide and thiosulfate as the emulsion in Examples 4-11 are added to a 50 part aliquot of this emulsion. The product contains 20% hydroxamate (100% conversion).

### Example 37

Following the procedure of Example 14, a microdispersion of a hydroxamated polyacrylamide is prepared. The ethoxylated nonylphenol is omitted. The hydroxamated polymer is isolated as a dry powder by precipitation in methanol. It has a degree of hydroxamation of 17% (85% conversion). The Solution Viscosity is 4.3 mPa.s.

### Examples 38-43

The procedure of Example 20 is repeated except that the sulfonic acid salt is replaced, as indicated, by: 38) MAPTAC (25%); 39) styrene sulfonic acid (20%); 40) methacrylic acid (48%); 41) carboxymethyl cellulose ester (5%); 42) acrylic acid and methacrylic acid (35%) (5%), respectively; and 43) methacrylic acid and sodium acrylate (20%) (80%), respectively, (no acrylamide used). In each instance, stable microdispersions are produced.

## Claims

1. A stable water-in-oil microdispersion comprising a continuous phase of an oil and an emulsifier and a discontinuous phase comprising particles of an aqueous solution of an hydroxamated polymer having a molecular weight over 1,000,000, wherein said particles have an average size ranging from 0.02 to 50µm, the microdispersion has a solution viscosity over 2.0 mPa.s, and the structural integrity of the microdispersion remains intact.

2. The water-in-oil microdispersion of Claim 1 wherein the polymer is a polymer of acrylamide.

3. The water-in-oil microdisperson of Claim 1 containing, in addition, a hydroxylamine stabilizer.

4. The water-in-oil microdispersion of Claim 1 which is self-inverting.

5. The water-in-oil microdispersion of Claim 1 wherein the polymer is a copolymer of acrylamide and at least one additional monomer.

6. A method of producing the water-in-oil microdispersion of Claim 1 which comprises reacting (1) a water-in-oil emulsion comprising a continuous phase of a hydrocarbon oil and an emulsifier and a discontinuous phase of an aqueous solution of a polymer having a molecular weight over 1,000,000 with (2) neutralized hydroxylamine and at least a 0.25 molar excess amount of base at a temperature ranging from 10°C to 90 °C.

7. The method of Claim 6 wherein (2) contains a hydroxylamine stabilizer.

8. The method of Claim 6 wherein the base is sodium hydroxide.

9. The method of Claim 6 wherein the neutralized hydroxylamine and the base are in the form of an emulsion.

## Patentansprüche

1. Stabile Wasser-in-Öl-Mikrodispersion mit einer kontinuierlichen Phase aus einem Öl und einem Emulgator und einer diskontinuierlichen Phase mit Partikeln einer wässrigen Lösung eines hydroxamierten Polymers mit einem Molekulargewicht über 1 000 000, wobei die Partikel eine durchschnittliche Größe im Bereich von 0,02 bis 50 µm aufweisen, die Mikrodispersion eine Lösungsviskosität über 2,0 mPa.s aufweist und die Strukturintegrität der Mikrodispersion intakt bleibt.

2. Wasser-in-Öl-Mikrodispersion gemäß Anspruch 1, bei der das Polymer ein Polymer von Acrylamid ist.

3. Wasser-in-Öl-Mikrodispersion gemäß Anspruch 1, die zusätzlich einen Hydroxylaminstabilisator enthält.

4. Wasser-in-Öl-Mikrodispersion gemäß Anspruch 1, die selbstinvertierend ist.

5. Wasser-in-Öl-Mikrodispersion gemäß Anspruch 1, bei der das Polymer ein Copolymer von Acrylamid und mindestens einem zusätzlichen Monomer ist.

6. Verfahren zur Herstellung der Wasser-in-Öl-Mikrodispersion gemäß Anspruch 1, welches die Umsetzung von 1) einer Wasser-in-Öl-Emulsion mit einer kontinuierlichen Phase eines Kohlenwasserstofföls und einem Emulgator und einer diskontinuierlichen Phase einer wässrigen Lösung eines Polymers mit einem Molekulargewicht über 1 000 000 mit 2) neutralisiertem Hydroxylamin und wenigstens einer 0,25-Mol-Überschussmenge an Base bei einer Temperatur im Bereich von 10 °C bis 90 °C umfasst.

7. Verfahren gemäß Anspruch 6, bei dem 2) einen Hydroxylaminstabilisator enthält.

8. Verfahren gemäß Anspruch 6, bei dem die Base Natriumhydroxid ist.

9. Verfahren gemäß Anspruch 6, bei dem das neutralisierte Hydroxylamin und die Base in Form einer Emulsion vorliegen.

## Revendications

1. Microdispersion eau-dans-huile stable, comprenant une phase continue d'une huile et d'un émulsifiant et une phase discontinue comprenant des particules d'une solution aqueuse d'un polymère à groupes hydroxamate présentant un poids moléculaire supérieur à 1 000 000, dans laquelle lesdites particules présentent une taille moyenne allant de 0,02 à 50 µm, la microdispersion ayant une viscosité en solution supérieure à 2,0 mPa.s, et l'intégrité structurale de la microdispersion restant intacte.

2. Microdispersion eau-dans-huile selon la revendication 1, dans laquelle le polymère est un polymère d'acrylamide.

3. Microdispersion eau-dans-huile selon la revendication 1 contenant en outre un stabilisant d'hydroxylamine.

4. Microdispersion eau-dans-huile selon la revendication 1 auto-inversible.

5. Microdispersion eau-dans-huile selon la revendication 1, dans laquelle le polymère est un copolymère d'acrylamide et d'au moins un monomère additionnel.

6. Procédé pour la production d'une microdispersion eau-dans-huile selon la revendication 1, comprenant la réaction (1) d'une émulsion eau-dans-huile comprenant une phase continue d'une huile hydrocarbonée et d'un émulsifiant et une phase discontinue d'une solution aqueuse d'un polymère présentant un poids moléculaire supérieur à 1 000 000, avec (2) de l'hydroxylamine neutralisée et un excès molaire d'au moins 0,25 d'une base, à une température comprise entre 10°C et 90°C.

7. Procédé selon la revendication 6, dans lequel le réactif (2) contient un stabilisant d'hydroxylamine.

8. Procédé selon la revendication 6, dans lequel la base est l'hydroxyde de sodium.

9. Procédé selon la revendication 6, dans lequel l'hydroxylamide neutralisée et la base se présentent sous la forme d'une émulsion.
